# EUROPEAN PATENT APPLICATION

(11) **EP 1 538 616 A2**
(43) Date of publication of application: **08.06.2005**
(21) Application number: 04105389.3
(22) Date of filing: 28.10.2004
(51) Int. Cl.: G11B 15/50, G11B 15/32

(54) **A clutch for a tape device**

(30) Priority: 01.12.2003 KR 2003086264
(71) Applicant: SAMSUNG ELECTRONICS CO., LTD., Gyeonggi-do, 442-742 Suwon-si (KR)
(72) Inventor: Seo, Jae-kab 601-902, Yuwon Apartment 1265, Suwon-si Gyeonggi-do (KR); Oh, Jeong-hyeob 309-1005, Daewon Apartment, Anyang-si Gyeonggi-do, (KR); Kim, Jun-young 212-1301, Hangook Apartment, 1054-3, Suwon-si Gyeonggi-do, (KR)
(74) Representative: Geary, Stuart Lloyd

(57) **Abstract**

A reel clutch device and method for tape recorders is disclosed. The reel clutch device has an elastic member mounted in the lower side of the reel disk; a reel washer mounted between the elastic member and the reel gear to be in frictional contact with the top surface of the reel gear; The reel clutch device and method further comprises a reel plate mounted to be in frictional contact with the bottom surface of the reel gear; and a reel stopper mounted on the lower side of the reel plate, and for adjusting a gap between the reel disk and the reel gear in order for adequate friction torque to occur between the reel washer and the top surface of the reel gear and the reel plate and the bottom surface of the reel gear.

## Description

The present invention relates to a clutch for transferring a driving force between driving means and a tape reel, the clutch comprising frictional contact means operable to contact frictionally said driving means to said tape reel and biasing means operable to provide a resilient force between said driving means and said tape reel.

Tape recorders/players are devices which record information onto a recording medium, such as a magnetic tape, and then reproduce the recorded information. Examples of tape recorders are video cassette tape recorders(VCRs), camcorders, and the like.

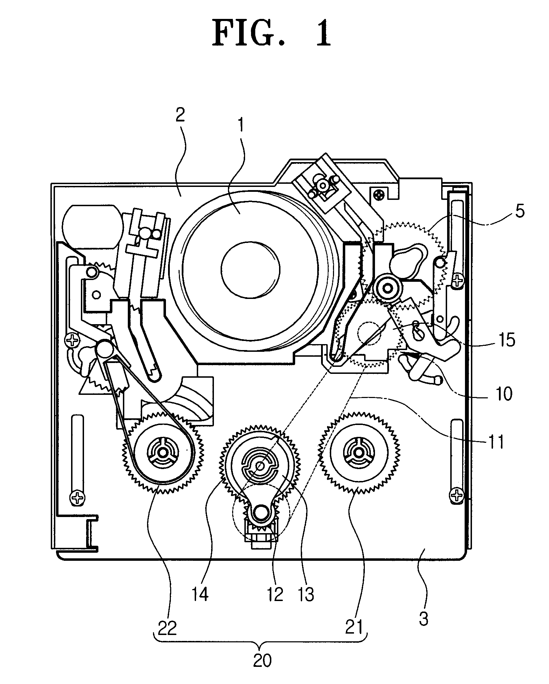

Referring to Figure 1, a tape recorder has a main deck 2 onto which a head drum 1 is rotatably mounted, a sub-deck 3 mounted on the main deck 2 and is able to be loaded and unloaded onto the main deck 2, a pair of reel disk assemblies 20 rotatably mounted on the sub-deck 3 for driving the tape reel of a tape cassette (not shown), and a power transmission unit 10 for selectively transmitting the power of a capstan motor (not shown) which is mounted on the main deck 2 to one of the pair of reel disk assemblies 20.

The pair of reel disk assemblies 20 consists of a supply reel disk assembly 22 for supplying magnetic tape from a tape cassette and a take-up reel disk assembly 21 for winding up the supplied magnetic tape.

The power transmission unit 10 includes a capstan gear 15 meshed with a shaft gear 5 of the capstan motor, a timing belt 11 for transmitting the power of the capstan gear 15 to a pulley gear 12, and an idle gear 14 meshed with the pulley gear 12 and which is selectively coupled by a rotation lever 13 with one of the pair of reel disk assemblies 21 and 22 to transmit power thereto. The rotation lever 13 rotates about the shaft of the pulley gear depending upon the rotation direction of the pulley gear 12.

According to the described structure, the power of the capstan motor rotating at high speed is transmitted to one of the pair of reel disk assemblies 21 or 22 via the power transmission unit 10. The reel disk to which power is transmitted depends upon whether the magnetic tape is to be moved in a forward or a reverse direction. The pair of reel disk assemblies 20 each has a reel clutch device for producing a torque which is appropriate for the travelling speed of the magnetic tape. The torque is based on the tension of the magnetic tape.

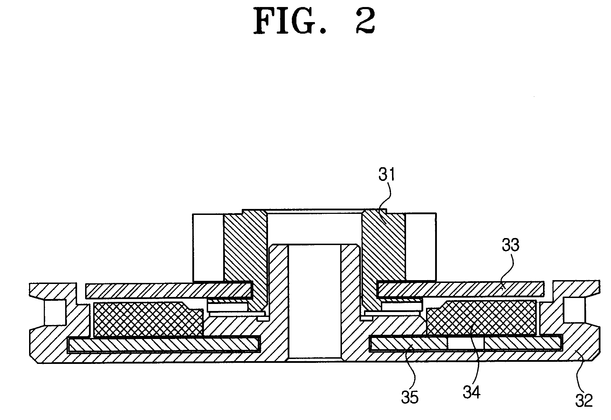

Figure 2 is a cross-sectional view showing a known magnetic reel clutch device for tape recorders/players. Referring to Figure 2, the magnet reel clutch device includes a reel gear 32 and a reel disk 31 which are stacked on one another and are assembled on the deck (not shown) of the tape recorder. An iron-plate base 35 and an iron plate 33 are mounted in the reel gear 32 and the reel disk 31 and are located opposite each other. A magnet 34 is mounted between the iron base 35 and the iron plate 33.

In the reel clutch device having the described structure, when the power is transmitted from the capstan motor via the reel gear 32, an appropriate torque is transmitted to the reel disk 31 because of the magnetic attraction between the iron plate 33 and the magnet 34.

However in the described, known, reel clutch device, the iron-plate base 35 which supports the magnet 34 is inserted into the reel gear 32 and is press-fit into place. The iron plate 33, on the other hand, is located in the reel disk 31 and then press-fit into place. This results in problems with assembling the device. Further, the magnet is expensive.

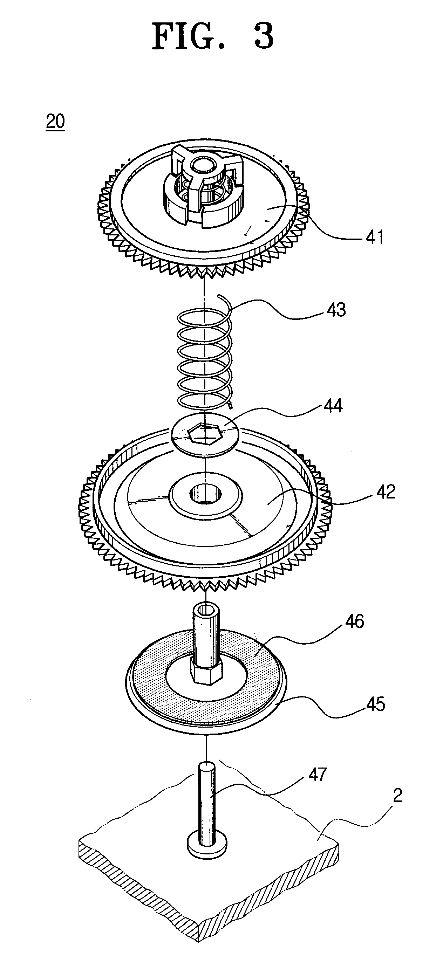

Figure 3 is an exploded perspective view showing a known felt reel clutch device 20 for tape recorders. Specifically, Figure 3 is a view showing another known reel disk assembly 20 including a felt reel clutch device. Referring to Figure 3, the reel disk assembly 20 has an upper disk 41 which has the tape reel of a tape cassette seated thereon. Also provided is a lower disk 45 fitted below, but coupled to, the upper disk 41, and a reel gear 42, a spring 43, and a contact piece 44 which is installed between the respective upper and lower disks 41 and 45 to provide a frictional contact force. A felt piece 46 provided on the upper side of the lower disk 45 contacts with the bottom surface of the reel gear 42 so that when torque is applied to the reel disk 42, the friction between the reel disk 42 and the lower disk 45 ensures that the lower disk 45 rotates. The rotation of the lower disk 45 is passed to the upper disk 41 as these are mountably engaged.. Further, the transmitted torque is adjusted by the force of the spring 43 ensuring that the correct amount of torque is transferred. In the described structure, the idle gear 14 of Figure 1 is coupled with and transmits the power of the capstan motor to the reel gear 42, and the power is transmitted to the upper disk 41 by rotating the lower disk 45 which is coupled to the reel gear 42 by the friction between the felt 46 and the reel gear 42. Therefore, an adequate torque is transmitted to the upper disk 41 through the lower disk 45 depending upon the tension of the magnetic tape. Further, the tape reel of a tape cassette seated on the upper disk 41 turns based on the torque transmitted to the upper disk 41 allowing magnetic tape to be wound.

The reel clutch device using felt as described has an advantage of having a low manufacturing cost due to a simple assembly and low supply cost compared to the magnet reel clutch device. However, the reel clutch device using the felt has less functional reliability due to variations of transmission torque resulting from the characteristics of the felt which are affected by temperature and humidity. In particular, the felt reel clutch device has a problem in transmitting a constant torque since the torque rapidly increases in high humidity and goes through severe variations in its magnitude at low temperatures.

The present invention has been developed in order to solve the above drawbacks associated with the conventional arrangement. An aspect of the present invention is to provide a reel clutch device and method for tape recorders which can be manufactured at low cost and transmit a constant torque regardless of variations of ambient environment.

The present invention relates to a clutch for transferring a driving force between driving means and a tape reel, the clutch comprising frictional contact means operable to contact frictionally said driving means to said tape reel and biasing means operable to provide a resilient force between said driving means and said tape reel

A clutch according to the present invention is characterised by a reel base arranged to be operable with the tape reel to provide a predetermined spacing therebetween.

Preferably, the reel base has a stopper portion which cooperates with the tape reel to provide the predetermined spacing.

The clutch may further comprise second frictional contact means located on an opposite side of said driving means.

Also, the frictional contact means may comprise a serrated surface on the driving means, wherein the frictional contact means is biased against said serrated surface.

An embodiment of the present invention will now be described, by way of example only, and with reference to Figures 4 - 6, in which:
Figure 1 is a plan view for schematically showing a known tape recorder;
Figure 2 is a cross-sectioned view showing a known magnet reel clutch device for tape recorders;
Figure 3 is an exploded perspective view showing a known felt reel clutch device for tape recorders;
Figure 4 is a cross-sectional view of a reel clutch device for tape recorders according to an embodiment of the present invention;
Figure 5 is an enlarged cross-sectioned view for showing a portion A of Figure 4; and
Figure 6 is an exploded perspective view showing the reel clutch device for tape recorders shown in Figure 4.

In the drawings, it should be noted that the same or similar elements are deno ted by the same reference numerals even though they are depicted in different drawings.

In the following description, the same drawing reference numerals are used for the same elements in different drawings. Examples are used to describe embodiments of the present invention. Thus, it should be apparent that the present invention can be performed without the examples shown without departing from the scope of the invention. Also, well-known functions or constructions are not described in detail for conciseness.

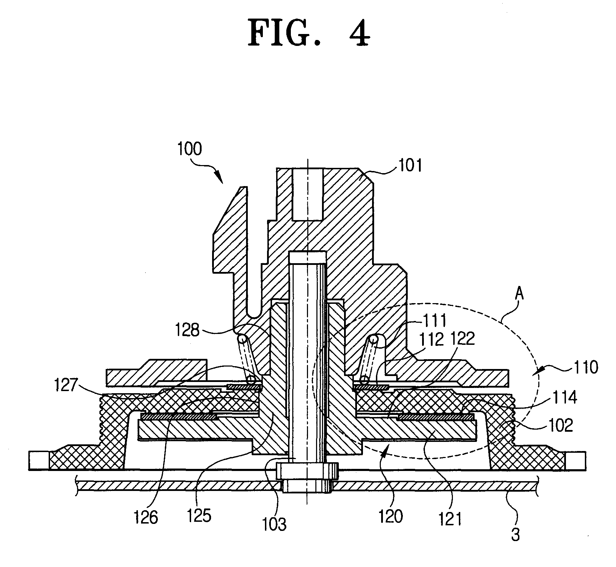

Referring to Figures 4, 5 and 6, a reel clutch device 110 for tape recorders/players according to an embodiment of the present invention has an elastic member 111, a reel washer 112, a reel plate 114, first and second serrations 104 and 105 formed on the upper and lower sides of the reel gear 102, and a reel stopper 120.

The elastic member 111 is mounted in the lower side of the reel disk 101, and applies a constant pressure to the reel washer 112 abutting it, and thus pressing it against the upper surface of the reel gear 102. A cone-shaped coil spring is used for the elastic member 111 in an embodiment of the present invention.

The reel washer 112 is interposed between the reel gear 102 and the elastic member 111, and assembled on the reel stopper 120, in frictional contact with the upper surface of the reel gear 102. The opening 112a of the reel washer 112 is formed in a polygonal shape such as a rectangular shape, or a hexagonal shape, and a portion 127 of the reel stopper 120 on which the reel washer 112 is mounted is appropriately shaped so as to allow engagement of the opening 112a of the reel washer 112. Therefore, if the opening 112a of the reel washer 112 is shaped as a hexagon as shown in the present embodiment, the portion 127 of the reel stopper is shaped as a hexagonal shaft.

The reel plate 114 is located between the bottom of the reel gear 102 and the reel stopper 120, and assembled to be in frictional contact with the bottom of the reel gear 102. The opening 114a of the reel plate 114 is formed in a polygonal shape such as a rectangular shape, or a hexagonal shape, and a portion 122 of the reel stopper 120 on which the reel plate 114 is mounted is shaped so as to engage with the opening 114a of the reel plate 114. Therefore, if the opening 114a of the reel plate 114 is hexagonal, a hexagonal projection portion 122 is formed on the base portion 121 of the reel stopper 120.

The reel washer 112 and the reel plate 114 can be formed of, for example, iron plate, somaraito or teflon. Since somaraito and teflon have a lubrication property, extra lubricant may not be required. If substances such as an iron plate are used, lubricant such as oil is applied on the surface of the iron plate which is in contact with the reel gear 102, to reduce abrasion and to reduce variations in torque provided by friction.

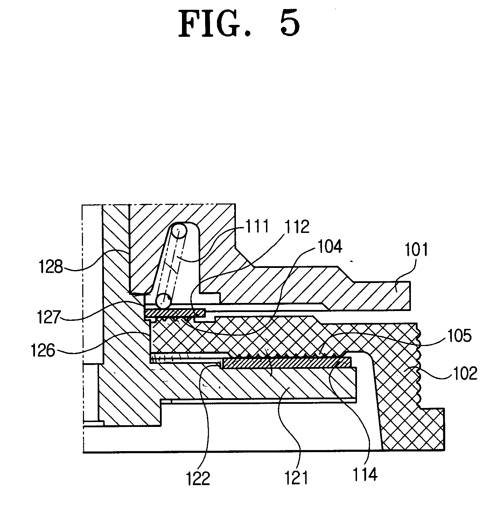

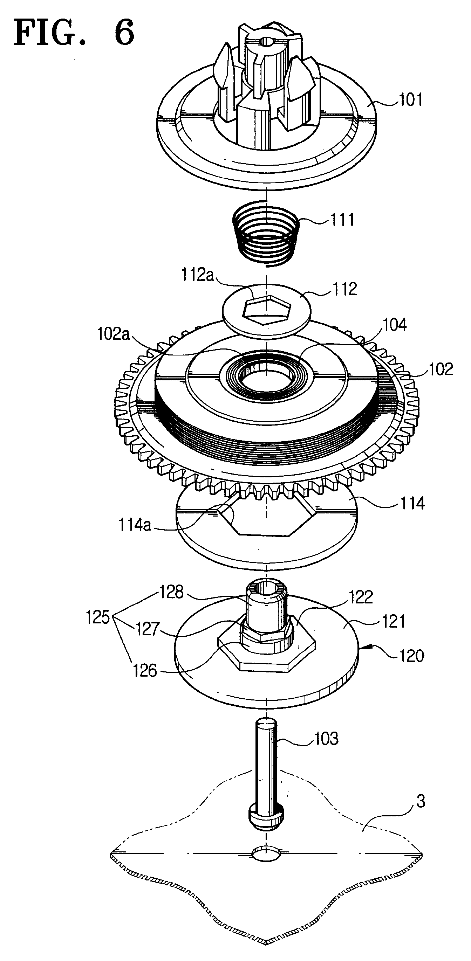

Serrations are provided on the reel gear 102 to reduce variations in the torque transmitted using friction. The first serration 104 is formed on the top surface of the reel gear 102 which is in frictional contact with the reel washer 112, and the second serration is formed on the bottom surface of the reel gear 102 which is in frictional contact with the reel plate 114. As shown in Figures 5 and 6, the first and second serrations 104 and 105 have a number (preferably more than 2) of protrusions formed in the concentric circles about the rotation shaft of the reel gear 102.

The reel stopper 120 is located underneath the reel plate 114, and is fitted to the reel disk 101 so as to rotate about the reel shaft 103 with the reel disk 101. The reel shaft is fitted to the sub deck 3. The reel stopper 120 includes the base part 121 and a shaft part 125, and the base part 121 includes the protrusion portion 122 to which the reel plate 114 is fitted. Further, the shaft part 125 has a reel gear fitting portion 126 to which the reel gear 102 is rotatably assembled, a reel washer fitting portion 127 to which the reel washer 112 is fixed, and a reel disk fitting portion 128 to which the reel disk 101 is fitted. Further, the assembling gap between the reel stopper 120 and the reel disk 101 and the elastic force of the elastic member 111 determine the frictional torque between the reel washer 112 and the top surface of the reel gear 102 and between the reel plate 114 and the bottom surface of the reel gear 102. Thus, the elastic member 111 and the assembling gap between the reel stopper 120 and the reel disk 101 are determined so that the power of the capstan motor transmitted to the reel gear 102 be properly transmitted to the reel disk 101.

Descriptions will now be made of the assembling order of the reel disk assembly according to the embodiment, the assembly including the reel clutch device for tape recorders which has the previously described structure.

First, the reel plate 114 is fitted to the base part 121 of the reel stopper 120. The reel plate 114 is precisely fitted so that the opening 114a fits over and engages with the protrusion portion 122 of the reel stopper base part 121. Next, the reel gear 102 is fitted to the shaft part 125 of the reel stopper 120. Thus, the reel gear 102 is fitted to the reel gear fitting portion 126 of the reel stopper 120 through the opening 102a. Next, the reel shaft part 125 is inserted through the opening 112a of the reel washer 112. The reel washer 112 is in contact with the first serration 104 of the reel gear 102. The reel washer 112 is fitted over the reel washer fitting portion 127 of the reel stopper 120 through the opening 112a. The reel washer 112 thus engages with the reel washer fitting portion 127. Next, the elastic member 111 is inserted over the shaft part 125 of the reel stopper 120, and the reel disk 101 is fitted to the reel disk fitting portion 128 of the reel stopper 120. To complete assembly, the fully assembled reel disk assembly 100 is inserted into the reel shaft 103 fixed to the sub-deck 3.

Descriptions will now be made on operations of the reel clutch device for tape recorders according to an embodiment of the present invention with reference to Figure 1, and Figures 4 to 6.

The power of the capstan motor is transmitted through the power transmission unit 10 (refer to Figure 1) to rotate the reel gear 102. Since the reel gear 102 is loosely-fitted to the reel gear fitting portion 126 of the reel stopper 120, the power of the reel gear 102 is not directly transmitted to the reel stopper 120 even though the reel gear 102 rotates. In other words, the reel gear 102 rotates and the first and second serrations 104 and 105 are in frictional contact with the reel washer 112 and the reel plate 114 respectively. Since the reel washer 112 and the reel plate 114 are pressed against the reel gear 102 by the elastic member 111, the reel washer 112 and the reel plate 114 rotate with the reel gear 102 using the frictional force between the first serration 104 and the reel washer 112 and between the second serration 105 and the reel plate 114. However, since the reel washer 112 and the reel plate 114 are fixed to the reel stopper 120 by the hexagonal reel washer fitting portion 127 and the protrusion part 122, the reel stopper 120 rotates as the reel washer 112 and the reel plate 114 rotate. In other words, the power generated in the reel gear 102 changes to a frictional torque on the reel washer 112 and the reel plate 114. It is the frictional contact between the reel washer 112 and the reel plate 114, both acting on the reel stopper 120, that rotates the reel stopper 120. Thus, the reel disk 101 coupled to the reel stopper 120 rotates, which causes the magnetic tape to be wound onto the tape reel seated on the reel disk 101. At this time, the frictional torque transmitted by the frictional force which exists between the first and second serrations 104 and 105 of the reel gear 102, the reel washer 112, and the reel plate 114, is adequately adjusted depending upon the tension of the magnetic tape.

As described above, the reel clutch device for tape recorders has an advantage of having a low supply cost since the magnets are not used, and are easy to assemble because it can be assembled with the reel plate, reel gear, reel washer, elastic member, and reel disk inserted over the reel stopper. Further, the reel clutch device minimises variations of transmitted frictional torques due to changes in ambient environment such as temperature, humidity, and so on. This is because the members producing the frictional torque are made of iron, somaraito, Teflon, and the like, which are robust against ambient environment changes.

The skilled person will appreciate that although the present embodiment is described with the elastic member 111 pressing against the upper surface of the reel gear 102, the elastic member 111 could equally press against the lower surface of the reel gear 102.

The foregoing embodiment and advantages are mere examples and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A clutch for transferring a driving force between driving means (102) and a tape reel (101), the clutch comprising:
frictional contact means (112,114) operable to contact frictionally said driving means (102) to said tape reel (101); and
biasing means (111) operable to provide a resilient force between said driving means (102) and said tape reel (101), **characterised by**:
a reel base (121) arranged to be operable with the tape reel (101) to provide a predetermined spacing therebetween.

2. A clutch according to claim 1, wherein the reel base has a stopper portion (121) which cooperates with the tape reel to provide the predetermined spacing.

3. A clutch according to either one of claim 1 or 2, further comprising second frictional contact means (114) located on an opposite side of said driving means (102).

4. A clutch according to any one of claims 1, 2 or 3, wherein the frictional contact means (112,114) comprises:
a serrated surface (104, 105) on the driving means (102), wherein the frictional contact means (104, 114) is biased against said serrated surface (104, 105).

5. A reel clutch device for tape recorders mounted in a reel disk assembly to transmit rotary torque of a reel gear to a reel disk, the reel disk assembly being mounted on a deck of each of the tape recorders and having the reel gear and the reel disk, comprising:
an elastic member mounted in the lower side of the reel disk;
a reel washer mounted between the elastic member and the reel gear and in frictional contact with the top surface of the reel gear;
a reel plate mounted to be in frictional contact with the bottom surface of the reel gear; and
a reel stopper mounted on the lower side of the reel plate for adjusting a gap between the reel disk and the reel gear in order for adequate friction torque to occur between the reel washer and the top surface of the reel gear and the reel plate and the bottom surface of the reel gear.

6. The reel clutch device as claimed in claim 5, wherein the friction torque is transmitted to the reel disk by the reel stopper.

7. The reel clutch device as claimed in claim 6, wherein the reel washer has an opening comprising a hexagonal shape, and a corresponding part of the reel stopper to which the reel washer is fitted comprises a hexagon-shaped shaft.

8. The reel clutch device as claimed in claim 6, wherein the reel plate has an opening comprising a hexagonal shape, and a corresponding part of the reel stopper to which the reel plate is fitted is formed comprises a hexagon-shaped protrusion.

9. The reel clutch device as claimed in claim 5, wherein the reel gear has a serration formed on at least one side thereof with which the reel washer and the reel plate are in contact.

10. The reel clutch device as claimed in claim 9, wherein the serration is formed with a plurality of concentric circles having a predetermined interval between each one of the plurality of concentric circles.

11. The reel clutch device as claimed in claim 9, wherein the reel washer and the reel plate comprises at least one of iron, somaraito, and Teflon.

12. The reel clutch device as claimed in claim 9, wherein lubricant is applied between the reel washer, reel plate, and reel gear.

13. The reel clutch device as claimed in claim 5, wherein the elastic member comprises a cone-shaped coil spring.

14. A method for transmitting rotary torque of a reel gear to a reel disk reel clutch device for tape recorders mounted in a reel disk assembly, the method comprising:
mounting an elastic member in the lower side of the reel disk;
mounting a reel washer between an elastic member and the reel gear, and placing the reel washer in frictional contact with the top surface of the reel gear;
mounting a reel plate to be in frictional contact with a bottom surface of the reel gear; and
mounting a reel stopper on the lower side of the reel plate in order to adjust a gap between the reel disk and the reel gear and provide adequate friction torque to occur between the reel washer and the top surface of the reel gear and the reel plate and the bottom surface of the reel gear.

15. The method of claim 14 further comprising:
transmitting the friction torque to the reel disk via the reel stopper.

16. The method of claim 14, wherein the reel washer has an opening comprising a hexagonal shape, and a corresponding part of the reel stopper to which the reel washer is fitted comprises a hexagon-shaped shaft.

17. The method of claim 14, wherein the reel plate has an opening comprising a hexagonal shape, and a corresponding part of the reel stopper to which the reel plate is fitted is formed comprises a hexagon-shaped protrusion.

18. The method of claim 14, wherein the reel gear has a serration formed on at least one side thereof with which the reel washer and the reel plate are in contact.

19. The method of claim 18, further comprising:
forming the serration with a plurality of concentric circles having a predetermined interval between each one of the plurality of concentric circles.

20. The method of claim 18, wherein the reel washer and the reel plate comprises at least one of iron, somaraito, and Teflon.

21. The method of claim 18, further comprising:
applying lubricant between the reel washer, reel plate, and reel gear.

22. The method of claim 14, wherein the elastic member comprises a cone-shaped coil spring.
